# EUROPEAN PATENT APPLICATION

(11) **EP 1 881 686 A1**
(43) Date of publication of application: **23.01.2008**
(21) Application number: 07112618.9
(22) Date of filing: 17.07.2007
(51) Int. Cl.: H04M 3/51, H04M 3/523

(54) **Remote expert screen pop via data message**

(30) Priority: 18.07.2006 US 488938
(71) Applicant: Aspect Software Inc., Chelmsford MA 01824 (US)
(72) Inventor: Prabhuram, Mohan, San Jose, CA 95131 (US)
(74) Representative: Modiano, Micaela Nadia

(57) **Abstract**

A method and apparatus are provided that allows an agent (16) of an organization to display client information on a computer (64,66) of a consultant (56,58). The method includes the steps of the agent receiving a call from a client (12) of the organization along with information about the client from a host of the organization and selecting the consultant for a communication session between the agent and consultant (102). The method also includes the step of the host sending the client information to an Internet address of the consultant within a data message that is sent through a communication channel that is different than a channel of the communication session (104,106,108,112).

## Description

### Field of the Invention

The invention relates to information retrieval systems and more particularly to methods of accessing expert help.

### Background of the Invention

Methods of servicing clients of an organization are generally known. In order to ensure consistency, agents of the organization are often given a general set of rules as a guide for dealing with clients and client concerns.

Organizations also usually provide a number of databases to help their agents serve their clients. A first database may be provided that contains data about the client. One or more other databases may be provided for addressing the concerns of clients.

When an agent of the organization is contacted by the client, the agent may first access the client database to first determine the circumstances of the client. If the client has had previous contact with the organization, then the client's previous contacts with the organization may help the agent understand the context of the current concern. However, if a current contact with the client is a first contact, then the client database may not offer any help in understanding the client's concern.

In either case, the agent may search one or more other databases to collect information and facts about the concern. Once the facts surrounding the concern have been identified, the agent may attempt to apply the rules of the organization to the facts.

The search for information in some cases is arduous and time-consuming. Further, once the facts have been identified, it can be often difficult to apply the organization's rules to the situation. Where the facts and rules are complex, the results are often arbitrary.

In an effort to ameliorate the effects of this process, many organizations rely upon one or more experts to reduce uncertainty. Usually, the agent will begin by first identifying the client and then researching the concern and attempting to come to a conclusion on his own.

Where the agent is uncertain of the reliability of the conclusion, the agent may contact an expert. However, the expert may not be located at the same site as the agent and seldom has the same communication tools as the agent. As a consequence, the expert may not see the same information available to the agent and it may become difficult for the expert to quickly understand the client or the context of the concern. Accordingly, a need exists for better methods of presenting client information to remotely located experts.

### Summary

A method and apparatus are provided that allows an agent of an organization to display client information on a computer of a consultant. The method includes the steps of the agent receiving a call from a client of the organization along with information about the client from a host of the organization and selecting the consultant for a communication session between the agent and consultant. The method also includes the step of the host sending the client information to an Internet address of the consultant within a data message that is sent through a communication channel that is different than a channel of the communication session.

### Brief Description of the Drawings

FIG. 1 depicts a system for simplifying consultations between agents and experts in accordance with an illustrated embodiment of the invention;
FIG. 2 depicts a flow chart of method steps that may be used by the system of FIG. 1; and
FIG. 3 depicts a screen that may be used by the system of FIG. 1.

### Detailed Description of an Illustrated Embodiment

In general, many organizations operate based upon a collective set of theories and objectives that are constantly changing based upon the type of organization involved, the objectives of the organization and the environment within which the organization exists. Often the dynamic nature of organizational objectives prevents the development of any cohesive body of searchable information. Within such an environment, operational decisions require the constant input of a number of experts who are knowledgeable about the current state of the organization.

FIG. I depicts a system 10 that simplifies consultations with remotely located consultants (experts) under an illustrated embodiment of the invention. The system 10 may be used to facilitate the interaction among a group of clients 12, a group of experts 14 and a group of agents 16. As used herein, an expert is not an agent of the organization and is not directly connected to the same host as the agent.

In general, the term "remote" is used to characterize an expert more because of the communication tools available to the expert rather than because of any physical distance requirement imposed on the expert. In most cases, an agent would communicate with an expert via telephone or the Internet.

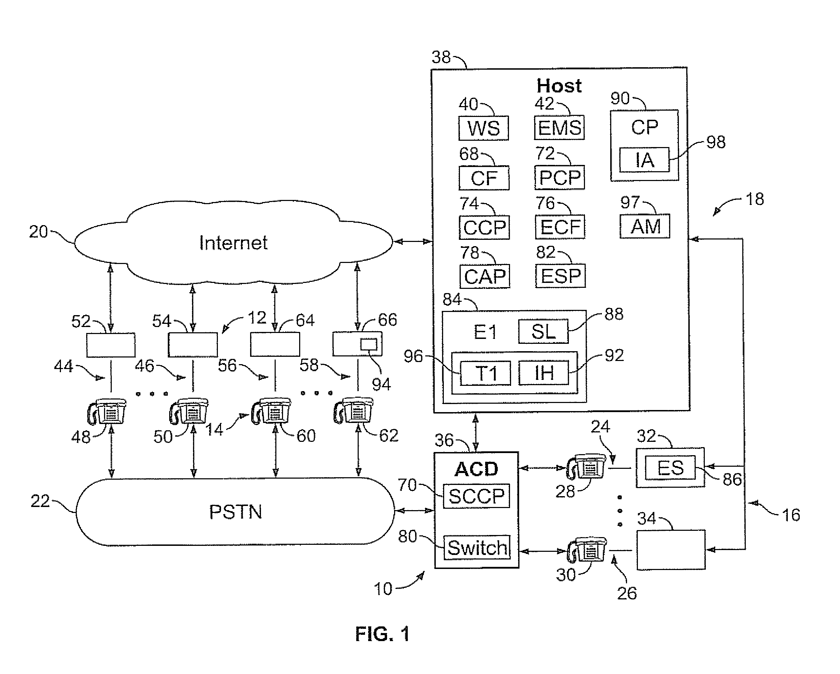

The system 10 of FIG. 1 may include an automatic contact distribution (ACD) system 18 that is used by an organization to establish contacts between the organization's clients 12 and agents 16 of the organization through the Internet 20 or public switch telephone network (PSTN) 22. To this end, the organization may promulgate (by advertising or otherwise) a number of communication path identifiers (e.g., telephone numbers, e-mail addresses, URLs, etc.) that allow access to the organization by the organization's clients. Alternatively, the organization may purchase lists of communication system port identifiers (e.g., telephone numbers, e-mail addresses, etc.) that allow the organization to contact the clients 12.

A work station 24, 26 may be provided for each agent of the group of agents 16. Each work station 24, 26 may include a telephone console 28, 30 and a computer terminal 32, 34.

An ACD 36 of the system 18 may be provided to route switched circuit voice calls between agents 16 and clients 12. The ACD 36 may route calls based upon the identity of the client 12, the skill of the agent 16, the purpose of the call or any of a number of other reasons.

Similarly, the host 38 may function to route packet based calls (e.g., e-mail, chat, VOIP, etc.) between clients 12 and agents 16. The host 38 may also include any of a number of web sites 40 to facilitate calls between clients 12 and agents 16.

For example, the web sites 40 may contain one or more web pages with descriptive information that advances the agenda of the organization. Included on the web pages may be contact information (e.g., an e-mail address) through which a client 12 may request more information. Also included on one or more of the web pages may be a softkey entitled (CONVERSE WITH AGENT).

If a client of the client group 12 should activate the CONVERSE WITH AGENT softkey, then an interactive window may be downloaded to the client. Text associated with the interactive window may invite the client to enter a question to be answered by an agent 16 of the organization. In the client should proceed to enter a question, then the content of the question may be returned to the call processing system 10 as a call that is subsequently handled by an agent.

In addition to entering a question, the client may also be asked to enter a communication system port identifier where the client may be contacted. In response, the client may enter a telephone number, an e-mail address or a chat identifier.

Turning now to the clients 12, FIG. I shows two clients 44, 46. However, the group 12 may include any of a number of clients 44, 46. The clients 44, 46 may communicate with the organization through a respective telephone 48, 50 or computer terminal 52, 54.

Similarly, FIG. 1 shows two experts 56, 58. As above, the group 14 may include any number of experts 56, 58. The experts 56, 58 may communicate with agents 24, 26 of the organization through a respective telephone 60, 62 and/or computer terminal 64, 66.

In general, the ACD system 18 may process calls with clients 12 under any of a number of different formats. As each call is detected, a call file 68 is created to collect call associated information. For example, as each call is received by the ACD 36, a switched circuit call processor 70 may collect call associated information such as ANI and DNIS information. The ANI and DNIS information may be added to the call file 68.

The call associated information may be used to classify the call. On a first level, call associated information such as ANI may be used to identify the caller. On another level, DNIS may be used to determine a purpose of the call. For example, the ACD system 18 may receive calls directed to a number of different telephone numbers. In the case where the organization is a merchant one telephone number may be used for calls for a first product while a second telephone number may be used for calls for a second product. By knowing the intended destination of a call, the system 10 can deduce a purpose of the call.

Packet based calls may be handled in a similar manner. As each Call is detected, a call file 68 is created for the call. Call associated information derived from packet based calls received by a packet call processor 72 may be added to the call file 68 for the same purposes. For example, a call originating from the use of the CONVERSE WITH AGENT softkey may include an identifier of the webpage from which the call originated. Call associated information in this case could also include any telephone number, e-mail or chat identifier entered by the client for call-back purposes. Any message received from the client 44, 46 may also be added to the call file 68.

Call associated information may also be recovered by a packet call processor 72 from e-mails sent to the organization. Again, different e-mail addresses can be used to identify different subject matters of calls. Source URLs of the e-mails can be recovered and used as a means of identifying existing clients. The text of e-mails may also be added to the call file 68.

As call files 68 are created, a call classification processor 74 may classify each call based upon subject matter and caller. As a first step, the call classification processor 74 may use the call associated information to identify calls from existing clients 44, 46. the call classification processor 74 may do this by comparing source identifiers (e.g., ANI, URLs, etc.) with source identifiers found within a set of existing client files 76.

Once a call file 68 is associated with an existing customer file 76, the call classification processor 74 may retrieve information about the client 44, 46 and add the retrieved information to the call file 68. Additional information may include the subject matter of past calls. In the case where the organization is a merchant, the retrieved information may include past products purchased, yearly volume of purchases, etc.

Based upon a content of the call file 68, the call classification processor 74 may classify the call. Classification, in this case, means determining a set of skills needed by an agent 24, 26 to handle the call.

Once a call has been classified, the call classification processor 74 may transfer the call file to a call assignment processor 78. The call assignment processor 78 may compare the skill required by the call to a skill set of the group of agents 16. Based upon a closest match, the call assignment processor 78 may select an agent 24, 26 and transfer the call to the agent 24, 26.

In the case of a switched circuit call through the PSTN 22, transferring a call means instructing a switch 80 to connect a trunk line from the telephone 48, 50 of a client 44, 46 to a telephone 28, 30 of the selected agent 24, 26. In the case of a packet call, transferring the call may mean transferring the entire call file 68 to the selected agent 24, 26. In either case, transfer of the call to the agent 24, 26 would involve a screen pop that includes the content of the call file 68.

Upon transfer of the call to the selected agent 24, 26, the selected agent 24, 26 may converse with the client 44, 46 and exchange any needed information, complete any transaction or resolve any concern of the client 44, 46. In the case where the organization is a merchant, completion of the transaction may include completion of a sale. In the case where the organization is an environmental or political organization, completion of a transaction may include solicitation and receipt of any donations or contributions.

Upon occasion, the agent 24, 26 may not be able to complete the call to the satisfaction of the client 44, 46 or to the satisfaction of the selected agent 24, 26. In this case, the selected agent 24, 26 may wish to consult with an expert 56, 58.

In this regard, experts 56, 58 may not be part of the ACD system 18 and may not have the communication resources of the agents 24, 26. As such, there is no easy way for an expert 56, 58 to review client files 76.

Once the agent 24, 26 decides to consult with an expert 56, 58, the agent 24, 26 may place the client 44, 46 on hold in anticipation of contacting an expert 56, 58. Selection of the expert 56, 58 may be performed automatically or manually by the selected agent 24, 28.

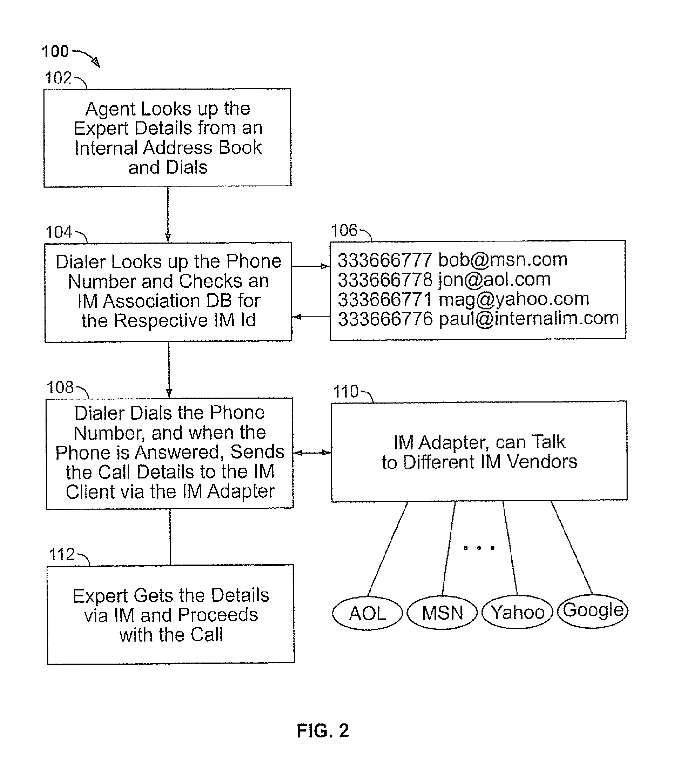

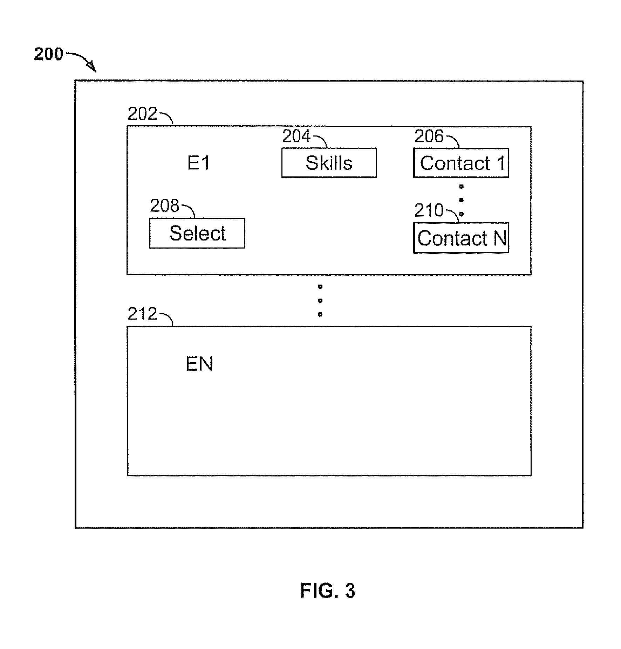

Under a first embodiment, selection of an expert 56, 58 may be performed manually as shown in FIG. 2. The agent 24, 26 may look up expert details 102 by activating an expert selection icon 86 on his terminal and be presented with an expert selection screen 200 (FIG. 3). Shown on the expert selection screen 200 may be a set of expert selection windows 202, 212 that each include a display 204 of the skills (qualifications) of the respective experts 56, 58. The use of the expert selection screen 200 may offer advantages over the automatic selection of an expert 56, 58 because the agent 24, 26 may select an expert 24, 26 based upon issues raised by the client 44, 46 after assignment of the call to the agent 24, 26.

Using the screen 200, the agent 24, 26 may review the qualifications 204 of each expert 56, 58. Once the agent 24, 26 has reviewed the qualifications 204, the agent 24, 26 may select an expert by activating a SELECT softkey 208.

Activation of the SELECT softkey 208 causes the terminal 32, 34 to send an identifier of the selected expert 56, 58 and an identifier of the call file 68 to a dialer (e.g., a communication processor) 90. In response, the communication processor 90 identifies a communication channel for communication between the agent 24, 26 and expert 56, 58 by retrieving 106 a communication system port identifier (e.g., a telephone number) from the file 84 of the selected expert 56, 58. In the case of a telephone number, the communication processor 90 may instruct the ACD 36 to place 108 a telephone call to the selected expert 56, 58.

The communication processor 90 also retrieves 104 the call file 68 and a URI (e.g., an IM handle) 92 from the file 84, 106 of the selected expert 56, 58. The communication processor 90 then composes a data message (e.g., an instant message, e-mail, etc.) 94 that incorporates the call file 68.

As used herein, a data message is a message through the Internet and is not a utility of the public switch telephone network. This is, the data message is not an ANI or DNIS message.

Included within the communication processor 90 may be an Internet adapter 98. The Internet adapter 98 functions to adapt 110 the data message to the data message protocol (e.g., AOL, MSN, YAHOO, GOOGLE, etc.) used by the selected expert's Internet service provider.

The data message 94 may be sent immediately upon activation of the SELECT softkey 208 or the sending of the data message 94 may be delayed until the selected expert answers his telephone 60, 62. The data message 94 is delivered to a terminal 64, 66 of the selected expert 56, 58 and is displayed 110 on a display of the terminal 64, 66 of the selected expert 56, 58.

As an alternative to allowing the communication processor 90 to determine the communication channel, the agent 24, 26 may manually select the communication channel by activating one of a number of channel softkeys 206, 210. Activation of a first channel softkey 206 may cause the communication processor 90 to retrieve a first communication system port identifier (e.g., VOIP) of the selected expert from a file 96 of the selected expert agent 56, 58. Activation of a second channel softkey 210 may cause the communication processor 90 to retrieve a second communication system port identifier (e.g., telephone through the PSTN) from a file 96 of the selected expert agent 56,58.

In another embodiment, agent 24, 26 may simply dial the telephone number of a selected expert 56, 58, In this case, the communication processor 90 may simply monitor the telephone number entered for any outgoing calls made by the selected agent 24, 26. As each outgoing call is detected, the dialed number is compared with a set of telephone numbers within the expert files 84. When a match is detected, the communication processor may display the expert selection window 202, 210. If the agent 24, 26 chooses to send the client information to the expert 56, 58, then the agent 24, 26 simply activates the SELECT softkey 208.

Alternatively, selection of an expert 56, 58 may be performed automatically. In this case, an expert selection processor 82 may select an expert by matching a skills list of the experts 56, 58 with a skill requirement of a call in a manner similar to agent assignment. In this regard, the host 38 may contain a skills list 88 within the file 84 of each expert 56, 58. The expert selection processor 82 may compare the set of skills provided by the call classification processor 75 with the skills of each expert 56, 58 and select the expert 56, 58 with a closest match to the skill set of the call.

Forwarding the call information within the call file 68 to the selected expert 56, 58 within a data message allows the selected expert 56, 58 to see the call information on the expert's terminal 64, 66 at substantially the same time as the call from the agent 24, 26 arrives. The delivery of the call information to the selected expert 56, 58 allows the selected expert 56, 58 to quickly review and understand the context of the call without detailed explanation from the agent 24, 26. By providing the call information to the selected expert 56, 58, the selected expert 56, 58 quickly comes up-to-speed and is able to counsel the selected agent 24, 26 in the proper resolution of the concern between the agent 24, 26 and client 44, 46.

Once the selected expert 44, 46 and agent 24, 26 have resolved the problem, the agent 24, 26 may hang up and reconnect to the client 44, 46. Using the advice provided by the selected expert 56, 58, the agent 24, 26 is able to quickly complete the call with the client 44, 46.

In general, the forwarding of the call information to the selected expert 56, 58 increases call handling efficiency on a number of different levels. On a first level, the transmission of the call information occurs on a communication channel that is different than the channel on which the agent 24, 26 communicates with the expert 56, 58. In the case where the agent 24, 26 discusses the call with the expert 56, 58 via telephone, the call information is displayed on the expert's terminal 64, 66 at the beginning of the conversation thereby allowing the expert 56, 58 to quickly understand, ask questions and offer comments to the agent 24, 26.

Further, even in the case where the agent 24, 26 converses with the expert 56, 58, via chat, the channels are different. The channels are different because end points are different. The channels are different because call information is sent to the expert 56, 58 from the communication processor 90, whereas the chat session occurs between the agent 24, 26 and the expert 56, 58.

A specific embodiment of method and apparatus for displaying information on a computer of a consultant has been described for the purpose of illustrating the manner in which the invention is made and used. It should be understood that the implementation of other variations and modifications of the invention and its various aspects will be apparent to one skilled in the art, and that the invention is not limited by the specific embodiments described. Therefore, it is contemplated to cover the present invention and any and all modifications, variations, or equivalents that fall within the true spirit and scope of the basic underlying principles disclosed and claimed herein.

## Claims

1. A method that allows an agent of an organization to display client information on a computer of a consultant comprising:
the agent receiving a call from a client of the organization along with information about the client from a host of the organization;
the agent selecting the consultant for a communication session between the agent and consultant; and
the host sending the client information to an Internet address of the consultant within a data message that is sent through a communication channel that is different than a channel of the communication session.

2. The method of displaying information as in claim 1 further comprising the agent selecting the channel for the communication session or further comprising displaying the client information on the computer of the consultant.

3. The method of displaying information as in claim 1 further comprising selecting the consultant from a plurality of consultants.

4. The method of displaying information as in claim 3 wherein the step of selecting the consultant further comprises selecting the consultant from a list displayed on a terminal of the agent or further comprises entering a communication system identifier of the consultant.

5. The method of displaying information as in claim 3 wherein the step of detecting the Internet address of the consultant further comprises searching a consultant list using an identifier of the selected consultant.

6. The method of displaying information as in claim 1 further comprising selecting a voice channel as the communication channel.

7. The method of displaying information as in claim 6 wherein the step of selecting a voice channel further comprising routing the communication channel at least partially through the public switch telephone network.

8. The method of displaying information as in claim 1 wherein the data message further comprises chat or wherein the data message further comprises e-mail.

9. An apparatus for allowing an agent of an organization to display client information on a computer of a consultant comprising:
means for receiving a call by the agent from a client of the organization along with information about the client from a host of the organization;
means for selecting the consultant for a communication session between the agent and consultant; and
means within the host for sending the client information to an Internet address of the consultant within a data message that is sent through a communication channel that is different than a channel of the communication session.

10. The apparatus for displaying information as in claim 9 further comprising means used by the agent for selecting the channel for the communication session.

11. The apparatus for displaying information as in claim 9 further comprising means for displaying the client information on the computer of the consultant.

12. The apparatus for displaying information as in claim 9 further comprising means for selecting the consultant from a plurality of consultants.

13. The apparatus for displaying information as in claim 12 wherein the means for selecting the consultant further comprises means for selecting the consultant from a list displayed on a terminal of the agent or further comprises means for entering a communication system identifier of the consultant.

14. The apparatus for displaying information as in claim 12 wherein the means for detecting the Internet address of the consultant further comprises means for searching a consultant list using an identifier of the selected consultant.

15. The apparatus for displaying information as in claim 9 further comprising means for selecting a voice channel as the communication channel.

16. The apparatus for displaying information as in claim 15 wherein the means for selecting a voice channel further comprising means for routing the communication channel at least partially through the public switch telephone network.

17. The apparatus for displaying information as in claim 9 wherein the data message further comprises chat.

18. The apparatus for displaying information as in claim 9 wherein the data message further comprises e-mail.

19. The apparatus for allowing an agent of an organization to display client information on a computer of a consultant as in claim 9 further comprising:
a work station of the agent that receives a call by the agent from a client of the organization along with information about the client from a host of the organization;
a selection screen on a display of the agent that allows the agent to select the consultant for a communication session between the agent and consultant; and
a communication processor within the host that sends the client information to an Internet address of the consultant within a data message that is sent through a communication channel that is different than a channel of the communication session.

20. The apparatus for displaying information as in claim 19 further comprising an expert selection screen for selecting the consultant from a plurality of consultants.

21. The apparatus for displaying information as in claim 19 wherein the data message further comprises chat or wherein the data message further comprises e-mail.
